Europäisches Patentamt

European Patent Office

Office européen des brevets

(11) Veröffentlichungsnummer : **0 393 387 B1**

(12) **EUROPÄISCHE PATENTSCHRIFT**

(45) Veröffentlichungstag der Patentschrift :
21.09.94 Patentblatt 94/38

(21) Anmeldenummer : 90105778.6

(22) Anmeldetag : 27.03.90

(51) Int. Cl.⁵ : **G01V 3/10**

(54) **Suchspulenanordnung für ein induktives Suchgerät.**

(30) Priorität : **19.04.89 DE 3912840**

(43) Veröffentlichungstag der Anmeldung :
**24.10.90 Patentblatt 90/43**

(45) Bekanntmachung des Hinweises auf die
Patenterteilung :
**21.09.94 Patentblatt 94/38**

(84) Benannte Vertragsstaaten :
**DE FR GB SE**

(56) Entgegenhaltungen :
**EP-A- 0 130 940
EP-A- 0 249 110
EP-A- 0 300 974
US-A- 4 201 965
PATENT ABSTRACTS OF JAPAN vol. 9, no.
110 (E-314)(1833) 15. Mai 1985 &
JP-A-60000718**

(73) Patentinhaber : **INSTITUT DR. FRIEDRICH
FÖRSTER PRÜFGERÄTEBAU GMBH & CO. KG
Postfach 15 64,
In Laisen 70
D-72705 Reutlingen (DE)**

(72) Erfinder : **Seichter, Helmut, Dr., Dipl.-Phys.
Elsterweg 112
D-7417 Pfullingen (DE)**
Erfinder : **Ausländer, Klaus, Dipl.-Ing. (FH)
Peter-Cornelius Strasse 19
D-7410 Reutlingen (DE)**
Erfinder : **Fabris, Hans-Jürgen, Dipl.-Ing. (FH)
Scheffelweg 29
D-7417 Pfullingen (DE)**
Erfinder : **Möck, Karl-Heinz
Sudetendeutsche Strasse 25
D-7410 Reutlingen (DE)**
Erfinder : **Patzwald, Wolfgang, Dipl-Phys.
Gumpperweg 36
D-7410 Reutlingen (DE)**

(74) Vertreter : **Patentanwälte Ruff, Beier,
Schöndorf und Mütschele
Willy-Brandt-Strasse 28
D-70173 Stuttgart (DE)**

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

## Beschreibung

Die Erfindung betrifft eine Suchspulenanordnung für ein induktives Suchgerät gemäß dem Oberbegriff von Patentanspruch 1. Induktive Suchgeräte benutzt man zum Auffinden von Gegenständen aus elektrisch leitenden Werkstoffen, die der unmittelbaren Wahrnehmung durch den Menschen entzogen sind, weil sie sich z. B. unter dem Erdboden befinden oder von anderen Stoffen geringer elektrischer Leitfähigkeit umgeben sind. Dabei ist es sowohl möglich, das Suchgerät über eine zu durchsuchende Fläche hinwegzuführen, als auch zu überprüfende Güter an einem ortsfesten Suchgerät vorbeizuführen. In beiden Fällen ergibt sich bei einer Annäherung zwischen Suchobjekten und Suchgerät eine elektrische Signalspannung, die in geeigneter Weise in ein vom Menschen wahrnehmbares Signal, etwa ein akustisches oder optisches, umgewandelt wird. Eine wichtige Rolle spielt dabei die Suchspulenanordnung, in der die elektrische Signalspannung entsteht.

Suchspulenanordnungen der oben genannten Art sind in verschiedenen Ausführungsformen vorgeschlagen worden. So kennt man beispielsweise ein amerikanisches Minensuchgerät, bei dem die Empfängerspule der Suchspulenanordnung aus vier paarweise gegeneinander geschalteten, in einer gemeinsamen Ebene angeordneten Teilwicklungen besteht. Die Letzteren sind in Ausbuchtungen eines tellerartigen Gehäuses untergebracht, die an den vier Ecken eines Quadrates liegen. Nachteilig ist bei dieser Suchspulenanordnung, daß ein durch thermische oder andere Einflüsse bedingtes Verziehen des Gehäuses sich unmittelbar auf die Lage der Einzelwicklungen zueinander und ihre Lage gegenüber der Erregerspule auswirkt. Das hat jedoch mangelnde Stabilität und ein ständiges Driften der Ausgangsspannung der Empfängerspule zur Folge. Ein weiterer Nachteil ist das hohe Gewicht einer solchen Suchspulenanordnung. Von Nachteil ist ferner, daß die Teilwicklungen, die in ihren Spulendaten recht genau übereinstimmen müssen, eine hohe Präzision beim Wickeln erfordern.

Aus der EP-A-0 130 940 ist eine induktive Sensoranordnung bekanntgeworden, bei der Sende- und/oder Empfangsspulen als metallische Schicht auf einem elektrisch nicht leitenden Spulenträger aufgebracht sind. Derartige in Dick- oder Dünnschichtverfahren herstellbaren Spulen sind bezüglich ihrer Spulengeometrie recht gut reproduzierbar herstellbar, so daß sich beispielsweise durch Differenzbildung der Ausgangssignale zweier etwa gleich aufgebauter und bezüglich eines Magnetfeldes symmetrisch ausgerichteter Einzelspulen die Existenz von Inhomogenitäten des beide Einzelspulen durchdringenden magnetischen Wechselfeldes feststellen läßt. Insbesondere bei hohen und auch bei variablen Prüffrequenzen können allerdings hohe Störpegel entstehen, die die Empfindlichkeit der Spulenanordnung für kleine Störungen begrenzen.

Die Erfindung macht sich eine Suchspulenanordnung der eingangs genannten Art zur Aufgabe, die insbesondere auch bei hohen und verschiedenen Frequenzen hohe Empfindlichkeit bei niedrigen Störpegeln aufweist.

Diese Aufgabe wird gelöst durch eine Spulenanordnung, die gemäß Anspruch 1 gekennzeichnet ist.

Erfindungsgemäß realisiert man die Differenzbildung nicht erst durch Gegeneinanderschalten von Teilwicklungen, sondern bildet für jede einzelne Windung gesondert die Differenz. Dies geschieht, indem man die einzelnen Windungen aus Paaren von Leiterschleifen zusammensetzt, die jeweils eine Teilfläche umfassen, wobei der Windungssinn in den Leiterschleifen eines Paares gegenläufig ist. Man verhindert auf diese Weise, daß in den Teilwicklungen hohe, der Windungszahl entsprechende Potentiale induziert werden. Vielmehr werden jetzt lediglich die Potentialdifferenzen der einzelnen Windungen aufsummiert. Niedrige Potentiale werden vor allem deshalb angestrebt, weil die Bildung von parasitären kapazitiven Streuströmen nach Masse und insbesondere nach einem auf Massepotential liegenden Schirm umso größer ist, je höher die jeweils vorliegenden Potentiale sind. Aus

$$Q = C \cdot U$$

worin Q die elektrische Ladung, C die Streukapazität und U das vorliegende Potential ist, ergibt sich

$$I = dQ/dt = C \cdot dU/dt.$$

Von besonderer Bedeutung sind diese Streuströme I, wenn man mit höheren Frequenzen oder mit verschiedenen Frequenzen arbeitet.

Nach einer vorteilhaften Ausgestaltung der Erfindung kann zumindest die Empfängerspule in der Technik der gedruckten Schaltungen auf einer elektrisch isolierenden Trägerschicht aufgebaut sein. Dies bringt es mit sich, daß das Layout der Spulenanordnung bei entsprechender Vergrößerung mit sehr hoher geometrischer Genauigkeit hergestellt werden kann. Das einmal hergestellte Layout läßt sich mit großer Zuverlässigkeit und fast beliebig oft reproduzieren. Die Kosten für die Herstellung des Layouts lassen sich auf die Gesamtzahl der herzustellenden Suchspulenanordnungen umlegen und fallen daher nicht allzu sehr ins Gewicht. Im Gegensatz zu einem allen äußeren Einflüssen unmittelbar ausgesetzten Gehäuse bietet die den Teilflächen gemeinsame Trägerschicht die Gewähr dafür, daß die Lage der Teilflächen zueinander mit hoher Genauigkeit aufrecht erhalten werden kann. Erhebliche Einsparungen an Gewicht sind zudem bei der erfindungsgemäßen Bauweise möglich.

Nach einer anderen Ausgestaltung der Erfindung findet die an der Stoßstelle gegenläufiger Leiterschleifen sich ergebende Kreuzung auf beiden Seiten einer Trägerschicht statt, wobei die erforderlichen elektrischen Verbindungen von einer Seite der Trägerschicht zur anderen durch Durchkontaktierung bewerkstelligt werden.

Einer weiteren Ausgestaltung der Erfindung ist zu entnehmen, daß sich auf beiden Seiten einer Trägerschicht je ein Leiterband mit gegenläufigen Leiterschleifen befindet.

Eine vorteilhafte Ausgestaltung der Erfindung gibt an, wie man nach Art der Multilayertechnik höhere Windungszahlen realisieren kann, als bei nur einer Trägerschicht möglich sind.

Von hoher Bedeutung, insbesondere bei Mehrfrequenzgeräten und beim Einsatz höherer Frequenzen, ist eine Ausgestaltung der Erfindung, die eine weitere Herabsetzung der Potentiale ermöglicht. Beim Zusammensetzen zweier Leiterschleifen zu einer Windung findet zwangsläufig ein Seitenwechsel von einer Seite des Leiterbandes auf dessen andere Seite statt. Innenliegende Leiterschleifen wechseln mit außenliegenden ab. Die von den Leiterschleifen umfaßten Flächen sind daher nicht genau gleich. Nach der genannten Ausgestaltung der Erfindung wird zusätzlich zum zwangsläufig auftretenden Seitenwechsel im Verlauf jeder Windung ein weiterer Seitenwechsel herbeigeführt.

Eine Ausgestaltung der Erfindung besteht auch in Durchbrüchen der Trägerschicht, die der zusätzlichen Gewichtseinsparung und der Verbesserung der Beweglichkeit dienen.

Weitere Ausgestaltungen der Erfindung können den Unteransprüchen und der Beschreibung entnommen werden.

Im folgenden wird nun die Erfindung an Hand von Figuren durch Ausführungsbeispiele näher erläutert. Im einzelnen zeigen:

Figur 1          eine Suchspulenanordnung in herkömmlicher Differenzschaltung
Figur 2          eine Empfängerspule einer Suchspulenanordnung in zwei Ansichten
Figur 3          eine Empfängerspule in schematischer Darstellung
Figur 4          eine Empfängerspule in 3 Ansichten
Figur 5          eine andere Empfängerspule in 3 Ansichten
Figur 6          eine Ansicht einer Empfängerspule in Multilayertechnik
Figur 7          eine Empfängerspule in schmatischer Darstellung
Figur 8          eine Einzelheit von Figur 6

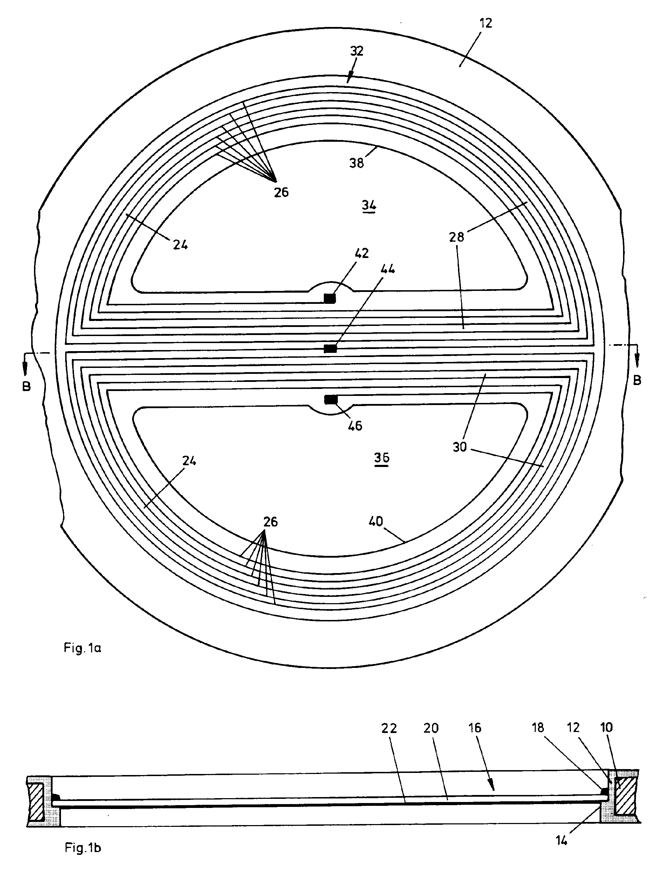

In Figur 1 ist eine Suchspulenanordnung in herkömmlicher Differenzschaltung in einer ersten Ausführungsform stark vereinfacht dargestellt. Bei Figur 1a handelt es sich um eine Draufsicht, bei Figur 1b um einen Schnitt entlang einer Linie B-B. Die Suchspulenanordnung besitzt eine Erregerspule 10, die in herkömmlicher Art auf einen Spulenrahmen 12 aus Kunststoff gewickelt ist. Ein Absatz 14 in der Bohrung des Spulenrahmens 12 trägt eine Leiterplatte 16, die durch einen Kleber 18 oder in einer anderen geeigneten Weise am Spulenrahmen 12 befestigt ist. Die Leiterplatte 16 besteht in bekannter Weise aus einer Trägerschicht 20 und darauf angebrachten Leiterbahnen 22. Die Letzteren sind in Form von Leiterbändern 24 dicht nebeneinander angeordnet. Der Einfachheit halber sind hier nur 6 Leiterbahnen gezeichnet. Es lassen sich jedoch ohne weiteres Leiterbänder ähnlicher Breite mit 20 bis 30 Leiterbahnen ausführen. Mit den Leiterbahnen 22 werden die Windungen 26 zweier Teilspulen 28, 30 realisiert, die zu einer Empfängerspule 32 zusammengeschaltet sind. Die Teilspulen 28, 30 umfassen mit den Leiterbändern 24 jeweils Teilflächen 34, 36, die etwas größer sind als die Flächen, die durch Durchbrüche durch die Trägerschicht 20 entlang der Linien 38, 40 entstanden sind. Teilspule 28 beginnt mit einem Anschluß 42 und endet mit Mittelanzapfung 44, Teilspule 30 beginnt bei der Mittelanzapfung 44 und endet mit einem Anschluß 46. Da die beiden Teilspulen 28, 30 gegeneinander geschaltet sind und das Feld der Erregerspule in ihnen gleiche Spannungen induziert, entstehen an den Anschlüssen 42, 46 der Empfängerspule 32 solange keine Spannungen, wie die Symmetrie des Magnetfeldes nicht durch Wirbelstromrückwirkungen von Suchobjekten gestört wird.

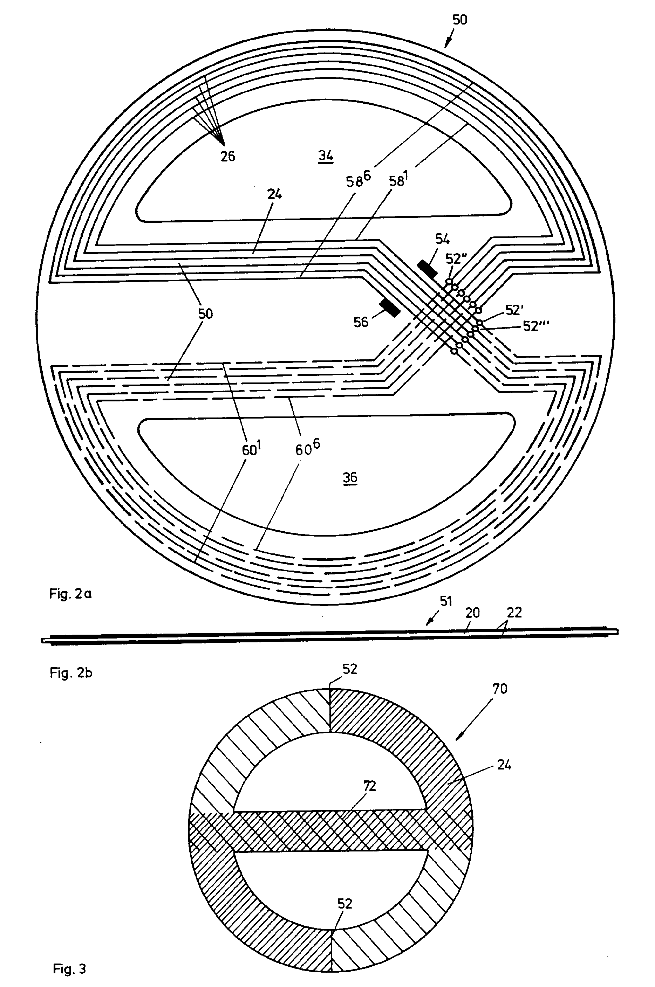

Die Figuren 2a und 2b zeigen die Leiterplatte 51 einer Empfängerspule 50 einer Suchspulenanordnung in Draufsicht beziehungsweise Vorderansicht. Auf beiden Seiten der Trägerschicht 20 sind Leiterbahnen 22 vorgesehen. Die Leiterbahnen 22 sind wiederum in Form eines Leiterbandes 24 nebeneinander angeordnet, wobei dessen eine Hälfte sich auf der Oberseite, die andere Hälfte (gestrichelt gezeichnet) auf der Unterseite der Trägerschicht 20 befindet. Durchkontaktierungen 52 verbinden in bekannter Technik die Leiterbahnen 22 von Ober- und Unterseite, die in Anschlüssen 54, 56 enden. Der grundlegende Unterschied zur Empfängerspule 32 nach Figur 1 besteht darin, daß die Windungen 26 sich jeweils aus zwei Leiterschleifen gegenläufiger Windungsrichtung zusammensetzen. So beginnt beispielsweise eine Leiterschleife $60^1$ an der mit dem Anschluß 54 verbundenen Durchkontaktierung 52′ und endet an einer anderen Durchkontaktierung 52″. Sie findet ihre Fortsetzung in einer Leiterschleife $58^1$, die wiederum an einer Durchkontaktierung 52‴ endet. Dabei umfassen die oberen Teilschleifen ($58^n$) jeweils eine Teilfläche 34, die unteren ($60^n$) eine Teilfläche 36. Die sich ergebende Kreuzung des Leiterbandes 24 wird so auf den beiden Seiten der Trägerschicht 20 realisiert. Von Bedeutung ist unter bestimmten Voraussetzungen noch, daß die jeweils zusammenstoßenden gegenläufigen

Teilschleifen $58^n$, $60^n$ erst in ihrer Summe die gleiche geometrische Größe aufweisen. Unterschiede der einzelnen Teilschleifen $58^n$, $60^n$ ergeben sich deshalb, weil bei jedem zusammenstoß zweier Leiterschleifen ein Wechsel von einer Seite des Leiterbandes 24 zur anderen stattfindet. So befindet sich z. B. Leiterschleife 58 auf der Innenseite des Leiterbandes 24 während sich Leiterschleife 60 auf dessen Außenseite befindet. Auf diesen Umstand wird später noch zurückgekommen.

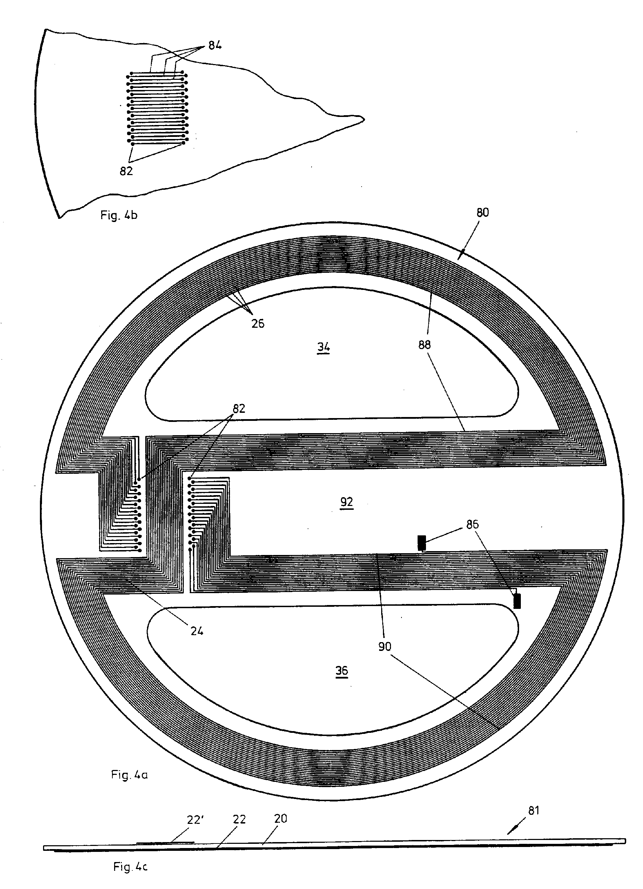

Figur 3 zeigt in schematischer Darstellung eine Empfängerspule 70, bei der die Durchkontaktierungen 52 nicht in der Nähe der Kreuzung des Leiterbandes 24, sondern in der Mitte des oberen beziehungsweise unteren Teiles des Leiterbandes angeordnet sind. Hiermit soll zum einen gezeigt werden, daß die Anordnung der Durchkontaktierungen 52 im Prinzip an beliebiger Stelle erfolgen kann. Zum anderen hat die vorliegende Anordnung den Vorzug, daß die mittleren Teile 72 des Leiterbandes 24 sich unmittelbar gegenüberliegen und so weniger Raum erfordern. Bei der Darstellung von Figur 3 wurde für die Oberseite der Trägerschicht 20 eine weite, für die Unterseite eine enge Schraffur benutzt.

In Figur 4 ist eine Empfängerspule 80 in einem realistischen Layout wiedergegeben. Empfängerspule 80 unterscheidet sich von den Empfängerspulen nach Figur 2 und 3 im Prinzip nur dadurch, daß die Durchkontaktierungen 82 an anderer Stelle angeordnet sind. Man erblickt die Leiterplatte 81 der Empfängerspule 80 in den Figuren 4a und 4b von unten beziehungsweise von oben, in Figur 4c in Vorderansicht. Die Anordnung der Durchkontaktierungen 82 beiderseits des zu kreuzenden Leiterbandes 24 führt dazu, daß die Leiterbahnen 22 auf der Rückseite der Trägerschicht 20 aus kurzen einfachen Brücken 84 bestehen können. Die Signalspannung der Empfängerspule 80 kann an Anschlüssen 86 abgenommen werden. Für den Aufbau der Windungen 26 aus gegeneinander geschalteten Leiterschleifen 88, 90 gilt das zuvor Gesagte gleichermaßen. Die in Figur 4 gewählte Anordnung der Empfängerspule 80 hat noch den Vorteil, daß in einfacher Weise mehrere Kreuzungsstellen nebeneinander auf dem Mittelstreifen 92 der Trägerschicht 81 angebracht sein können.

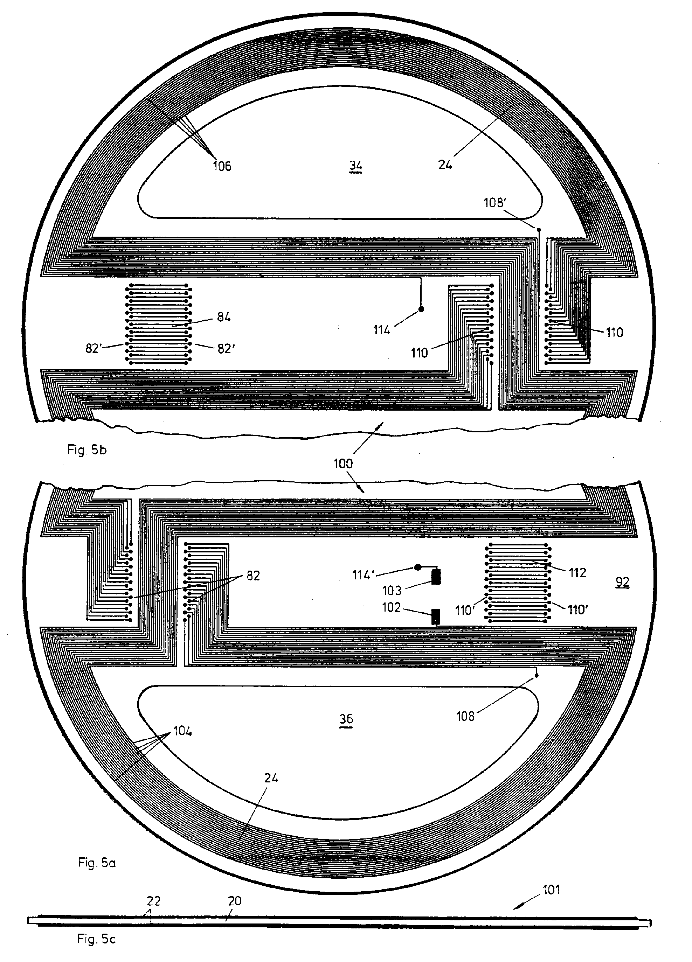

Figur 5 zeigt, wie dies Anwendung findet bei einer ähnlichen Empfängerspule 100 mit Anschlüssen 102, 103, die aus Windungen 104 und 106 auf der Ober- beziehungsweise Unterseite der Trägerschicht 20 zusammengesetzt ist. In den Figuren 5a und 5b ist Ober- beziehungsweise Unterseite einer Leiterplatte 101 mit Empfängerspule 100 dargestellt, in Figur 5c eine Vorderansicht derselben. Die Windungen 104 auf der Oberseite sind in gleicher Weise wie die der Empfängerspule 80 zusammengesetzt und mittels Durchkontaktierungen 82 und Brücken 84 durchverbunden. Beginnt man an Anschluß 102 mit den Windungen 104, so endet man nach Durchlaufen aller Windungen 104, der Durchkontaktierungen 82 und der Brücken 84 an einer Durchkontaktierung 108. Diese fällt mit Durchkontaktierung 108′ an der Unterseite zusammen und bildet dort den Beginn der Windungen 106. Über Durchkontaktierungen 110 und Brücken 112 gelangt man mit den Windungen 106 zu einer Durchkontaktierung 114, die unmittelbar mit Anschluß 103 verbunden ist. Auf diese Weise sind die beiden Teilflächen 34, 36 mit Leiterbändern 24 umgeben, die eine gegenüber Empfängerspule 80 verdoppelte Windungszahl ermöglichen.

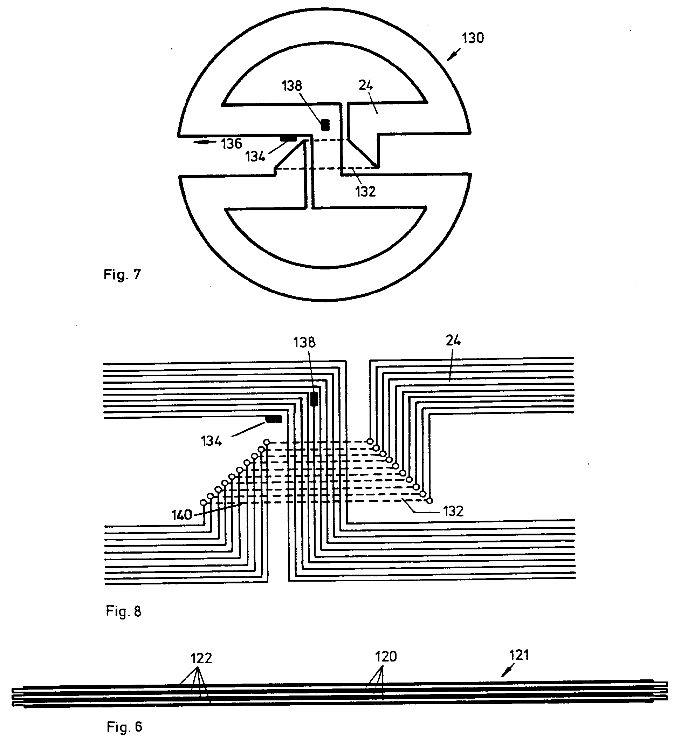

Eine weitere Erhöhung der Windungszahl der Empfängerspule gelingt durch Anwendung der Multilayertechnik, wie dies in Figur 6 dargestellt ist. Im vorliegenden Beispiel weist eine Leiterplatte 121 vier Schichten 122 von Leiterbahnen auf, die durch drei Trägerschichten 120 voneinander getrennt sind. Der Aufbau zweier Schichten von Leiterbahnen kann weitgehend der Ausführung gemäß Figur 5 entsprechen. Auch die beiden übrigen Schichten von Leiterbahnen können prinzipiell gleich aufgebaut sein. Es ist lediglich nötig, daß für sie an freigebliebenen Stellen des Mittelstreifens 92 Durchkontaktierungen und Brücken in der beschriebenen Art vorgesehen werden. Auf diese Weise können die Leiterbahnen von im vorliegenden Fall vier Schichten 122 hintereinander geschaltet werden, wodurch sich die Windungszahl gegenüber Empfängerspule 80 vervierfacht.

Mit den Figuren 7 und 8 soll gezeigt werden, wie man die kapazitiven Streuströme weiter wirksam vermindern kann. Figur 7 gibt in schematisierter Darstellung eine Empfängerspule 130 wieder, die in erfindungsgemäßen Suchspulenanordnungen Anwendung finden kann. Figur 8 ist eine vergrößerte Darstellung des Kreuzungsbereiches des Leiterbandes 24. In beiden Fällen sind die auf der Rückseite der Trägerschicht angeordneten Brücken 132 gestrichelt gezeichnet. Wie schon weiter oben erläutert, sind die jeweils zusammenstoßenden gegenläufigen Leiterschleifen der bisher beschriebenen Empfängerspulen nicht genau deckungsgleich. Die in den Schleifen induzierten Potentiale heben sich daher auch nicht genau heraus. Vielmehr steigt das Restpotential von Windung zu Windung bis zur Mitte des Leiterbandes 24 linear an und geht dann bis zur letzten Windung in gleicher Weise linear auf Null zurück. Führt man jeweils zueinander passende Leiterschleifen zusammen, so kann man das Entstehen von Restpotentialen von vorneherein vermeiden. Dies wird möglich, z. B. durch eine Anordnung der Empfängerwicklung nach den Figuren 7 und 8. Beginnt man mit einem Anschluß 134 in Richtung von Pfeil 136, so ergibt sich die folgende Reihenfolge der Leiterschleifen:

obere äußerste - untere äußerste

obere innerste - untere innerste

obere zweitäußerste - untere zweitäußerste

4

obere zweitinnerste - untere zweitinnerste

u. s. w.

Dies setzt sich fort bis die Empfängerspule 130 mit dem Anschluß 138 in der Mitte des Leiterbandes 24 endet. Auf diese Weise stoßen nur gleichwertige Leiterschleifen zusammen und die Potentiale heben sich für jede einzelne Windung exakt auf. Ein einfaches Mittel ermöglicht den jeweils zusätzlich benötigten Seitenwechsel innerhalb des Leiterbandes: Beim Wechsel von einer Seite der Trägerschicht zur anderen wird für jede Windung eine Unterschneidung 140 durchgeführt, d. h. ein Teil der Windungen des Leiterbandes 24 wird an dieser Stelle unterwandert, um auf die andere Seite des Leiterbandes zu gelangen.

## Patentansprüche

1.  Suchspulenanordnung für ein induktives Suchgerät mit einer Erregerspule (10) zur Herstellung eines sich ändernden Magnetfeldes, mit einer im Bereich des Magnetfeldes befindlichen, eine Vielzahl von Windungen (26) aufweisenden flächenhaften Empfängerspule (32), deren Fläche aus mindestens zwei gegeneinander verschobenen Teilflächen (34, 36) besteht, wobei sich die in den Teilflächen (34, 36) induzierten Spannungen am Ausgang der Empfängerspule (32) durch Differenzbildung gegeneinander im wesentlichen aufheben, **dadurch gekennzeichnet,** daß die einzelnen Windungen (26) sich aus Paaren von Leiterschleifen (58, 60; 88, 90) zusammensetzen, deren jede eine Teilfläche (34, 36) umfaßt und daß der Windungssinn in den Leiterschleifen (58, 60; 88, 90) eines Paares gegenläufig ist.

2.  Suchspulenanordnung nach Anspruch 1, dadurch gekennzeichnet, daß zumindest die Empfängerspule (32) in der Technik der gedruckten Schaltungen aufgebaut ist und mindestens eine allen Teilflächen (34, 36) gemeinsame Trägerschicht (20, 120) aus elektrisch isolierendem Material aufweist, auf der die Windungen (26) in Form eines Leiterbandes (24) von nebeneinander angeordneten Leiterbahnen (22, 122) aus elektrisch leitendem Material am Umfang der Teilflächen (34, 36) aufgebracht sind.

3.  Suchspulenanordnung nach Anspruch 2, dadurch gekennzeichnet, daß die an der Stoßstelle gegenläufiger Leiterschleifen (58, 60; 88, 90) sich ergebende Kreuzung von Leiterbändern (24) auf den beiden Seiten einer Trägerschicht (20) stattfindet und daß die erforderlichen elektrischen Verbindungen von einer Seite der Trägerschicht (20) zur anderen mit Hilfe von Durchkontaktierungen (52, 82, 110) hergestellt werden.

4.  Suchspulenanordnung nach Anspruch 3, dadurch gekennzeichnet, daß die einer ersten Teilfläche (34) zugehörigen Leiterschleifen (58.) sich auf einer Seite einer Trägerschicht (20), die einer zweiten Teilfläche (36) zugehörigen Leiterschleifen (60) sich auf der anderen Seite der Trägerschicht (20) befinden.

5.  Suchspulenanordnung nach Anspruch 3, dadurch gekennzeichnet, daß die gegenläufigen Leiterschleifen (88, 90) eines Leiterbandes (24) sich im wesentlichen auf der einen Seite einer Trägerschicht (20) befinden, daß das Leiterband (24) an der Stoßstelle der Leiterschleifen (88, 90) Unterbrechungen der Windungen (26) aufweist und daß die Unterbrechungen durch Leiterbrücken (84) geschlossen werden, die auf der anderen Seite der Trägerschicht (20) angeordnet sind.

6.  Suchspulenanordnung nach Anspruch 5, dadurch gekennzeichnet, daß auf beiden Seiten einer Trägerschicht (20) sich je ein Leiterband (24) mit gegenläufigen Leiterschleifen (88, 90) befindet, daß für jedes Leiterband (24) auf den gegenüberliegenden Seite der Trägerschicht (20) Leiterbrücken (84, 112) vorgesehen sind und daß die Windungen (104, 106) der Leiterbänder (24) mit Hilfe einer Durchkontaktierung (114) so hintereinandergeschaltet sind, daß die den gleichen Teilflächen (34, 36) zugehörigen Leiterschleifen (88, 90) den gleichen Windungssinn aufweisen.

7.  Suchspulenanordnung nach einem der vorhergehenden Ansprüche, dadurch gekennzeichnet, daß nach Art der Multilayertechnik in verschiedenen durch jeweils eine isolierende Trägerschicht (120) voneinander getrennten Leiterebenen (122) sich Leiterbänder (24) mit den Windungen (26; 104, 106) der Empfängerspule (50; 80; 100) befinden und daß die Leiterbänder (24) mit Hilfe von Durchkontaktierungen (82, 110, 114) hintereinander geschaltet sind.

8.  Suchspulenanordnung nach einem der Ansprüche 2 bis 6, dadurch gekennzeichnet, daß nach Art der Multilayertechnik in verschiedenen durch jeweils eine isolierende Trägerschicht (120) voneinander getrennten Leiterebenen (122) sich Leiterbänder (24) mit gegenläufigen Leiterschleifen (88, 90) befinden, daß die an den Stoßstellen der gegenläufigen Leiterschleifen (24) sich ergebenden Kreuzungen von Leiterbändern (2) auf sich gegenüberliegenden Leiterebenen (120) stattfinden, daß die erforderlichen elektrischen Verbindungen unter den Leiterebenen (120) mit Hilfe von Durchkontaktierungen (82, 110, 114) hergestellt werden und daß die Windungen (104, 106) der Leiterbänder (24) so hintereinander geschaltet sind, daß die den gleichen Teilflächen (34, 36) zugehörigen Leiterschleifen (88, 90) den gleichen Windungssinn aufweisen.

9. Suchspulenanordnung nach einem der Ansprüche 2 bis 8, dadurch gekennzeichnet, daß zusätzlich zu dem an der Stoßstelle gegenläufiger Leiterschleifen (58, 60; 88, 90) zwangsläufig auftretenden Seitenwechsel der Windungen (26; 104, 106) von einer Seite des Leiterbandes (24) auf dessen andere Seite im Verlauf jeder Windung (26; 104, 106) ein weiterer Seitenwechsel herbeigeführt wird.

10. Suchspulenanordnung nach Anspruch 9, dadurch gekennzeichnet, daß der genannte Seitenwechsel mit Hilfe von Unterschneidungen (140) beim Übergang der Windungen (26; 104, 106) von einer Seite einer Trägerschicht (20; 120) auf deren andere Seite stattfindet.

11. Suchspulenanordnung nach Anspruch 2, dadurch gekennzeichnet, daß in den vom Leiterband (24) umfaßten Gebieten der Teilflächen (34, 36) Durchbrüche (38, 40) in der Trägerschicht (20) ausgespart sind.

## Claims

1. Search coil assembly for an inductive detector with an exciting coil (10) for producing a varying magnetic field, with a flat receiver coil (32) in the vicinity of the magnetic field, which has a plurality of turns (26) and whose surface comprises at least two oppositely displaced partial surfaces (34, 36), the voltages induced in the partial surfaces (34, 36) substantially cancelling one another out in opposition by subtraction at the output of the receiver coil 32, characterized in that the individual turns (26) are formed from pairs of conductor loops (58, 60; 88, 90), whereof each comprises a partial surface (34, 36) and that there is an opposite winding direction in the conductor loops (58, 60; 88, 90) of a pair.

2. Search coil assembly according to claim 1, characterized in that at least the receiver coil (32) is constructed in printed circuit technology and has at least one carrier layer (20, 120) made from electrically insulating material common to all the partial surfaces (34, 36) and to which are applied the turns (26) in the form of a conductor band (24) of juxtaposed conducting tracks (22, 122) of electrically conductive material on the circumference of the partial surfaces (34, 36).

3. Search coil assembly according to claim 2, characterized in that the crossing of conductor bands (24) occurring at the intersection of oppositely directed conductor loops (58, 60; 88, 90) takes place on both sides of a carrier layer (20) and that the necessary electrical connections are produced from one side of the carrier layer (20) to the other with the aid of plated-through holes (52, 82, 110).

4. Search coil assembly according to claim 3, characterized in that the conductor loops (58) belonging to a first partial surface (34) are located on one side of a carrier layer (20), whilst the conductor loops (60) associated with a second partial surface (36) are located on the other side of the carrier layer (20).

5. Search coil assembly according to claim 3, characterized in that the oppositely directed conductor loops (88, 90) of a conductor band (24) are essentially located on one side of a carrier layer (20), that the conductor band (24) at the intersection of the conductor loops (88, 90) has interruptions of the turns (26) and that the interruptions are closed by conductor bridges (84), which are located on the other side of the carrier layer (20).

6. Search coil assembly according to claim 5, characterized in that on both sides of a carrier layer (20) there is in each case a conductor band (24) with oppositely directed conductor loops (88, 90), that for each conductor band (24) conductor bridges (84, 112) are provided on the opposite side of the carrier layer (20) and that the turns (104, 106) of the conductor bands (24) are so connected in series with the aid of a plated-through hole (114) that the conductor loops (88, 90) associated with the same partial surfaces (34, 36) have the same winding direction.

7. Search coil assembly according to one of the preceding claims, characterized in that in the manner of multilayer technology in different conductor planes (122) separated from one another in each case by an insulating carrier layer (120), there are conductor bands (24) with the turns (26; 104, 106) of the receiver coil (50; 80; 100) and that the conductor bands (24) are connected in series with the aid of plated-through holes (82, 110, 114).

8. Search coil assembly according to one of the claims 2 to 6, characterized in that in the manner of multilayer technology in different conductor planes (122) separated from one another by in each case an insulating carrier layer (120) there are conductor bands (24) with oppositely directed conductor loops (88, 90), that the crossings of conductor bands (2) occurring at the intersections of the oppositely directed conductor loops (24) are located on opposite conductor planes (120), that the necessary electrical connections under the conductor planes (120) are produced with the aid of plated-through holes (82, 110, 114) and that the turns (104, 106) of the conductor bands (24) are so connected in series that the conductor loops (88, 90) associated with the same partial surfaces (34, 36) have the same winding direction.

9. Search coil assembly according to one of the claims 2 to 8, characterized in that in addition to the side change of the turns (26; 104, 106) from one side of the conductor band (24) to the other necessarily occurring at the intersection of oppositely directed conductor loops (58, 60; 88, 90), in the course of each turn (26; 104, 106) a further side change is brought about.

10. Search coil assembly according to claim 9, characterized in that said side change takes place with the aid of undercuts (140) at the transition of the turns (26; 104, 106) from one side to the other of a carrier layer (20; 120).

11. Search coil assembly according to claim 2, characterized in that the areas of the partial surfaces (34, 36) covered by the conductor band (24) cutouts (38, 40) are made in the carrier layer (20).

## Revendications

1. Dispositif à bobines détectrices pour un appareil de détection inductive avec une bobine excitatrice (10) pour la génération d'un champ magnétique changeant, avec une bobine réceptrice (32) surfacée présentant une pluralité d'enroulements (26) se trouvant dans la zone du champ magnétique, bobine dont la surface se compose d'au moins deux surfaces partielles (34, 36) décalées l'une par rapport à l'autre, les tensions induites dans les surfaces partielles (34, 36) s'équilibrant entre elles à la sortie de la bobine réceptrice (32) par des formations de différences, caractérisé en ce que chacun des enroulements (26) se compose de paires de boucles conductives (58, 60 ; 88, 90) dont chacune comprend une surface partielle (34, 36) et en ce que le sens d'enroulement, dans les boucles conductives (58, 60 ; 88, 90) d'une boucle, est opposé.

2. Dispositif à bobines détectrices selon la revendication 1, caractérisé en ce qu'au moins la bobine réceptrice (32) est fabriquée suivant la technique des circuits imprimés et présente au moins une couche porteuse (20, 120) commune à toutes les surfaces partielles (34, 36) en matière isolante, couche sur laquelle les enroulements (26) sont appliqués sous forme d'une bande conductive (24) de pistes conductives (22, 122) disposées les unes à côtés des autres, en matière électriquement conductive à la périphérie des surfaces partielles (34, 36).

3. Dispositif à bobines détectrices selon la revendication 2, caractérisé en ce que le croisement de bandes conductives (24), résultant des boucles conductives (58, 60 ; 88, 90) opposées au point d'impact, se produit des deux côtés d'une couche porteuse (20) et en ce que les connexions électriques nécessaires entre les deux faces de la couche porteuse (20) sont établies à l'aide de trous métallisés (52, 82, 110).

4. Dispositif à bobines détectrices selon la revendication 3, caractérisé en ce que les boucles conductives (58), faisant partie de la première surface partielle (34), se trouvent sur une face d'une couche porteuse (20), les boucles conductives (60) faisant partie de la seconde surface partielle (36) sur l'autre face d'une couche porteuse (20).

5. Dispositif à bobines détectrices selon la revendication 3, caractérisé en ce que les boucles conductives opposées (88, 90) d'une bande conductive (24) se trouvent essentiellement sur une face d'une couche porteuse (20), que la bande conductive (24) présente, au point d'impact des boucles conductives (88, 90), des ruptures dans les enroulements (26) et que les ruptures sont fermées par des ponts conductifs (84) qui sont disposés de l'autre côté de la couche porteuse (20).

6. Dispositif à bobines détectrices selon la revendication 5, caractérisé en ce que des deux côtés d'une couche porteuse (20) se trouve une bande conductive (24) avec des boucles conductives opposées (88, 90), en ce que, pour chaque bande conductives (24), il est prévu, sur la face opposée de la couche porteuse (20), des ponts conductifs (84, 112) et en ce que les enroulements (104, 106) des bandes conductives (24) sont placés les uns derrière les autres à l'aide d'un trou métallisé (114), de sorte que les boucles conductives (88, 90), faisant partie des mêmes surfaces partielles (34, 36), présentent le même sens d'enroulement.

7. Dispositif à bobines détectrices selon l'une des revendications précédentes, caractérisé en ce que suivant la technique des multicouches, on trouve dans différents plans conductifs (122), séparés les uns des autres par une couche porteuse isolante (120), des bandes conductives (24) avec des enroulements (26 ; 104, 106) de la bobine réceptrice (50 ; 80 ; 100) et que les bandes conductives (24) sont placées les unes derrière les autres à l'aide de trous métallisés (82, 110, 114).

8. Dispositif à bobines détectrices selon l'une des revendications 2 à 6, caractérisé en ce que suivant la technique des multicouches, on trouve dans différents plans conductifs (122) séparés les uns des autres par une couche porteuse isolante (120), des bandes conductives (24) avec des boucles conductives (88, 90) opposées, en ce que les croisements de bandes conductives (2) résultant aux points d'impact des boucles conductives (24) opposées se produisent sur des plans conductifs opposés (120), en ce que les connexions électriques nécessaires sont établies sous les plans conductifs (120) à l'aide de trous métallisés (82, 110, 114) et en ce que les enroulements (104, 106) des bandes conductives (24) sont placés les uns derrière les autres de sorte que les boucles conductives (88, 90), faisant partie des mêmes surfaces partielles (34, 36), présentent le même sens d'enroulement.

9. Dispositif à bobines détectrices selon l'une des revendications 2 à 8, caractérisé en ce qu'en plus du changement de côté des enroulements (26 ; 104, 106) d'une face à l'autre de la bande conductive (24), changement survenant obligatoirement au point d'impact des boucles conductives (58, 60 ; 88, 90) opposées, il est provoqué un autre changement de côté dans la courbe de chaque enroulement (26; 104, 106).

10. Dispositif à bobines détectrices selon la revendication 9, caractérisé en ce que ledit changement de côté à l'aide de contre-intersections (140) se produit lors du passage des enroulements (26 ; 104, 106) d'un côté à l'autre côté de la couche porteuse (20 ; 120).

11. Dispositif à bobines détectrices selon la revendication 2, caractérisé en ce que dans les zones, entourées par la bande conductive (24), des surfaces partielles (34, 36), il est ménagé des perçées (38, 40) dans la couche porteuse (20).

Fig. 1a

Fig.1b

Fig. 2a

Fig. 2b

Fig. 3

84

82

Fig. 4b

80

26

34

88

82

92

85

24

90

36

Fig. 4a

22' 22 20

81

Fig. 4c

Fig. 5b

Fig. 5a

Fig. 5c

Fig. 7

Fig. 8

Fig. 6